# EUROPÄISCHE PATENTANMELDUNG

(11) **EP 0 796 694 A2**
(43) Veröffentlichungstag der Anmeldung: **24.09.1997**
(21) Anmeldenummer: 96117322.6
(22) Anmeldetag: 29.10.1996
(51) Int. Cl.: B23K 3/02

(54) **Lötkolben**

(30) Priorität: 20.03.1996 DE 29605169 U
(71) Anmelder: J. Lorch Ges. & Co. KG., Gesellschaft für Maschinen und Einrichtungen, 71111 Waldenbuch (DE)
(72) Erfinder: Schöllkopf, Horst c/o J.Lorch Ges.&Co.KG., D-71111 Waldenbuch (DE)
(74) Vertreter: Friz, Oliver

(57) **Zusammenfassung**

Die Erfindung betrifft einen Lötkolben mit einem Brenner zum Erhitzen eines Lötwerkzeugs und einer in Richtung des Lötwerkzeugs und einer Bearbeitungsposition offenen Abdeckhaube, in welche das Lötwerkzeug einsetzbar und an welcher das Lötwerkzeug befestigbar ist, wobei die Abdeckhaube die auf das Lötwerkzeug einwirkende Brennerflamme abdeckt; um das Lötwerkzeug gleichmäßig erwärmen zu können, wird der Lötkolben so ausgebildet, dass die Abdeckhaube auf der vom Brenner abgewandten Seite nach vornehin durch einen Wandbereich geschlossen ist.

## Beschreibung

Die Erfindung betrifft einen Lötkolben mit einem Brenner zum Erhitzen eines Lötwerkzeugs und einer in Richtung des Lötwerkzeugs und einer Bearbeitungsposition offenen Abdeckhaube, in welche das Lötwerkzeug einsetzbar und an welcher das Lötwerkzeug befestigbar ist, wobei die Abdeckhaube die auf das Lötwerkzeug einwirkende Brennerflamme abdeckt.

Im Unterschied zu Lötkolben gemäß EP 0 208 583 A1 mit einem sich an den Brenner anschließenden und allseits geschlossenen Heizkörper mit verhältnismäßig kleinen Eintritts- und Austrittsöffnungen für Luft und Verbrennungsgase, bei denen es stets zu Problemen hinsichtlich der Verbrennungswerte, insbesondere hinsichtlich der CO-Werte, kommt, betrifft die vorliegende Erfindung einen Lötkolben, dessen Flammbereich nur von einer vorstehend erwähnten Abdeckung überfangen ist. Bei einem derartigen bekannten Lötkolben ist die Abdeckung im wesentlichen U-förmig gebogen und in Richtung der Längsachse des Lötkolbens nach vornehin offen. Es treten zwar nicht die vorstehend erwähnten Probleme wie bei einem Lötkolben mit gekapselter Flamme auf, aber es erweist sich eine gleichmäßige Erwärmung des Lötwerkzeugs als schwierig. Bei Arbeiten im Freien, besonders unter ungünstigen Witterungsbedingungen, stellt die bekannte Abdeckhaube einen unzureichenden Windschutz dar und das Arbeiten mit dem bekannten Lötkolben ist schwierig.

Der vorliegenden Erfindung liegt daher die Aufgabe zugrunde, einen Lötkolben der eingangs beschriebenen Art dahingehend zu verbessern, dass die genannten Nachteile nicht auftreten.

Diese Aufgabe wird bei einem Lötkolben der genannten Art erfindungsgemäß dadurch gelöst, dass die Abdeckhaube auf der vom Brenner abgewandten Seite nach vornehin durch einen Wandbereich geschlossen ist.

Es hat sich gezeigt, dass die Ausbildung des Lötkolbens mit einer nach vorn geschlossenen Abdeckhaube einen hinreichenden Windschutz bietet und eine derartige Wärmekonzentration an dem zu erhitzenden Werkzeug erlaubt, dass dieses unabhängig von äußeren Einflüssen gleichmäßig und rasch erwärmt werden kann. Trotz der Reduzierung des Luftzutritts durch die Abschirmung des Flammbereichs des Lötkolbens nach vornehin treten Probleme im Hinblick auf die Verbrennungswerte nicht auf.

Bei einer, vorallem auch in optischer Hinsicht, ansprechenden Ausgestaltung der Abdeckhaube, verläuft der vordere Bereich der Abdeckhaube zur Längsachse des Lötkolbens geneigt und zur Längsachse des Lötwerkzeugs parallel. Der Lötkolben erhält dadurch als Ganzes ein kompaktes und gefälliges Aussehen.

Um eine einfache Montierbarkeit zu erreichen, weist die Abdeckhaube an ihrem hinteren, dem Handhabungsbereich des Lötkolbens zugewandten Ende einen nach hinten vorspringenden Stift zum Montieren der Abdeckhaube auf.

Der vorerwähnte, bei horizontaler Handhabung des Lötkolbens schräg nach oben verlaufende vordere Wandbereich der Abdeckhaube geht vorzugsweise in einen etwa rechtwinklig hierzu angeordneten, schräg nach unten verlaufenden Wandbereich über, in dem eine Öffnung zum Montieren des Lötwerkzeugs vorgesehen ist. Hierfür ist die Öffnung innen von einer Aufnahme für das Lötwerkzeug umgeben, in welche das Lötwerkzeug von der nach unten offenen Seite der Abdeckhaube eingeschoben und dabei bestimmungsgemäß positioniert werden kann. Die Aufnahme ist vorteilhafterweise von einem rohrförmigen Wandabschnitt gebildet, und das Lötwerkzeug ist auf der inneren Seite des die Öffnung umgebenden Bereichs der Abdeckhaube abstützbar.

In Weiterbildung der Erfindung von besonderer Bedeutung umfaßt die Aufnahme eine Verdrehsicherung für das darin eingesetzte Lötwerkzeug. Nach einem selbständig schutzbegründenden Erfindungsgedanken ist die Verdrehsicherung von einer in Längsrichtung des einzusetzenden Lötwerkzeugs verlaufenden nut- und federartigen Ausbildung von Werkzeugaufnahme und Werkzeugschaft gebildet. Hierdurch kann gewährleistet werden, dass das Lötwerkzeug in einer bestimmungsgemäßen Position zum Lötkolben montiert wird. Es kann sich auch als vorteilhaft erweisen, wenn die Aufnahme einen in Längsrichtung des Lötwerkzeugs verlaufenden und nach innen vorpringenden Steg aufweist, der mit einer von mehreren Längsnuten am Werkzeugschaft des Lötwerkzeugs zusammenwirkt. In diesem Fall kann das Lötwerkzeug in mehreren Relativpositionen zum Lötkolben befestigt werden.

Bei einer ganz besonders vorteilhaften Ausführungsform weist die Verdrehsicherung eine geringere axiale Erstreckung auf als die Aufnahme, so dass das Lötwerkzeug innerhalb eines ersten axialen Abschnitts der Aufnahme bezüglich dieser um seine Längsachse umdrehbar ist. Bei der vorstehend beschriebenen Ausführungsform kann hierfür der nach innen vorspringende Steg in einem Abstand zu der Einführöffnung der Aufnahme enden. Beim Einsetzen in die Aufnahme kann das Lötwerkzeug dann innerhalb dieses ersten axialen Abschnitts der Aufnahme bezüglich der Aufnahme um seine Längsachse umdreht werden und dann in der erwünschten Relativstellung zu dem Lötkolben durch weiteres Einschieben in die Aufnahme gegen ein Verdrehen gesichert und in dieser Position festgelegt werden. Wenn die Ausrichtung des Lötwerkzeugs zum Lötkolben verändert werden soll, braucht das Lötwerkzeug lediglich soweit aus der Aufnahme herausgezogen zu werden, dass die Verdrehsicherung gelöst wird und sich das Lötwerkzeug um seine Längsachse in die erwünschte Position verdrehen läßt. Es wird dann wieder zur Ausbildung einer erneuten Verdrehsicherung in die Aufnahme eingeschoben. Diese bevorzugte Ausführungsform hat den Vorteil, dass ein Montagemittel, wie eine Schraube zum Festlegen des Lötwerkzeugs nicht vollständig gelöst werden muß, um die Ausrichtung des Lötwerkzeugs zum Lötkolben zu verändern.

Von diesem Erfindungsgedanken wird gleichermaßen ein Lötwerkzeug, insbesondere eine Lötfinne, erfaßt, mit einem Werkzeugschaft der einen axialen Motageabschnitt mit einer in Längsrichtung verlaufende Nuten aufweisenden Profilierung zur Ausbildung einer Verdrehsicherung mit einer Aufnahme des Lötkolbens aufweist.

Weitere Merkmale, Einzelheiten und Vorteile der Erfindung ergeben sich aus den beigefügten Schutzansprüchen sowie der zeichnerischen Darstellung und nachfolgenden Beschreibung einer vorteilhaften Ausführungsform der Erfindung. In der Zeichnung zeigt
- Figur 1: einen Längsschnitt durch einen erfindungsgemäß ausgebildeten Lötkolben;
- Figur 2: einen Längsschnitt durch die erfindungsgemäß ausgebildete Abdeckhaube des Lötkolbens nach Figur 1;
- Figuren 3 bis 6: verschiedene Ansichten der Abdeckung nach Figur 2;
- Figur 7: ein Lötwerkzeug in Seitenansicht und teilweise geschnitten, und
- Figuren 8 und 9: eine Ansicht von unten und eine Schnittansicht einer weiteren Ausführungsform des Lötkolbens.

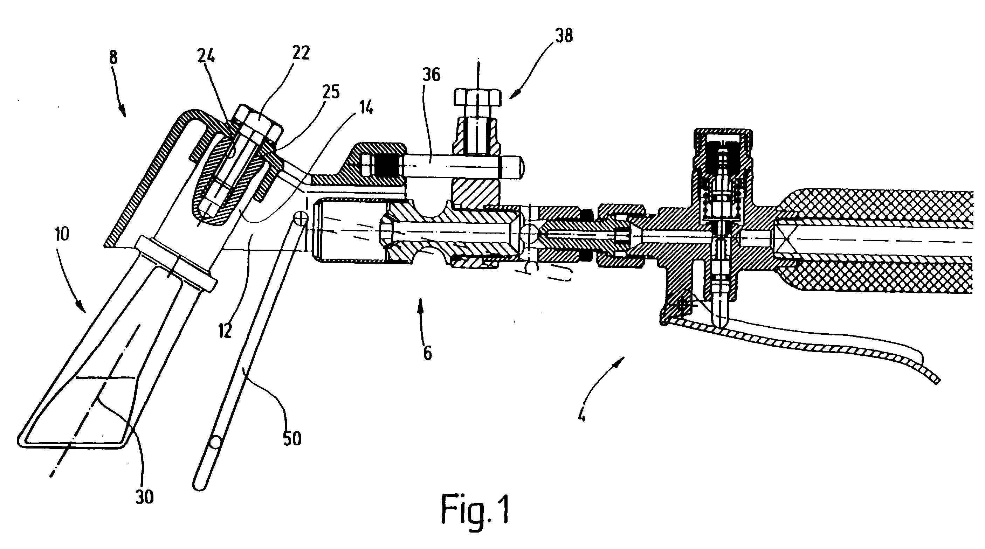

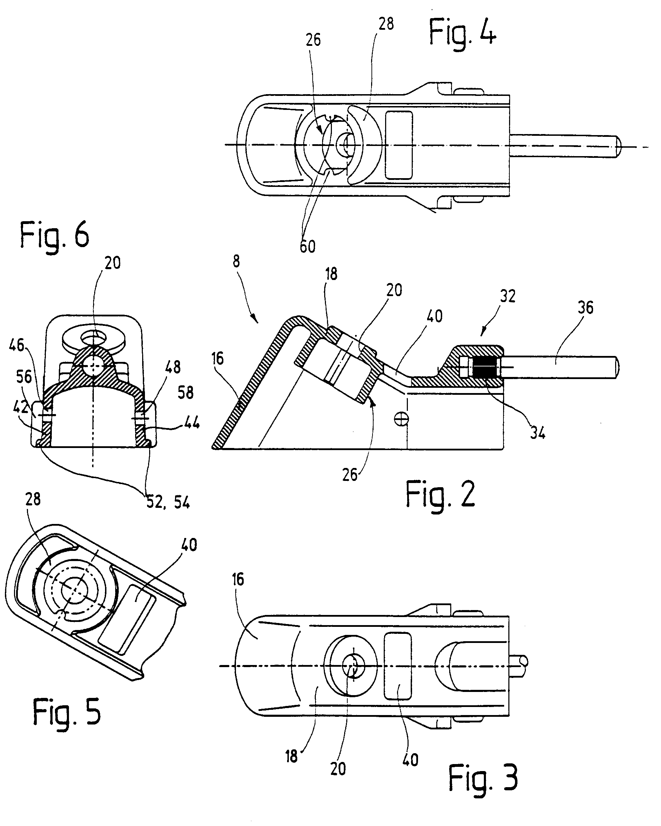

Die Figur 1 zeigt einen insgesamt mit dem Bezugszeichen 2 bezeichneten Lötkolben. Der Lötkolben 2 weist einen Handhabungsbereich 4, einen Brenner 6 sowie eine Abdeckhaube 8 auf, die am Brenner 6 gehalten ist und an der ein Lötwerkzeug 10 lösbar befestigt ist. Die Abdeckhaube 8 überfängt einen Flammenraum 12, in den eine vom Brenner 6 ausgehende Flamme, beipielsweise eine Propangasflamme gerichtet ist, die einen oberen Schaftabschnitt 14 des Lötwerkzeugs 10 unmittelbar beaufschlagt und erhitzt. Der Handhabungsbereich 4 sowie der Brenner 6 des Lötkolbens sind an sich bekannt und bedürfen daher keiner eingehenden Beschreibung. Die erfindungsgemäß ausgebildete Abdeckhaube 8 wird anhand der Figuren 2 bis 6 im einzelnen beschrieben.

Wie aus der Schnittdarstellung gemäß Figur 2 ersichtlich ist, umfaßt die in der Figur 2 nach unten offene Abdeckhaube 8 einen vorderen Wandbereich 16, der bei horizontaler Handhabung des Lötkolbens schräg nach oben verläuft, und dann in einen rechtwinklig hierzu angeordneten, schräg nach unten verlaufenden Randbereich 18 übergeht. In dem Wandbereich 18 ist eine Montageöffnung 20 vorgesehen, durch welche von außen eine Schraube 22 durchführbar und mit einem Innengewinde 24 einer in die Stirnseite 25 des freien Endes des Schaftabschnitts 14 des Lötwerkzeugs 10 eingebrachten Bohrung verschraubbar ist. An der Innenseite des Wandbereichs 18 der Abdeckhaube 8 ist eine Aufnahme 26 für das Lötwerkzeug 10 ausgebildet, und zwar in der Form eines rohrförmigen Wandabschnitts 28, der die Öffnung 20 umgibt. Das Lötwerkzeug 10 läßt sich mit dem freien Ende seines Schaftabschnitts 14 in den rohrförmigen Wandabschnitt 28 einführen und erhält dabei seine bestimmungsgemäße Montageposition. Die Stirnseite 25 des freien Endes des Schaftabschnitts 14 schlägt gegen die Innenseite des Wandbereichs 18 an und wird dann durch Verschrauben mit der Schraube 22 in dieser Position fixiert. Die Abdeckhaube 8 ist so aufgebaut, dass der vordere Wandbereich 16 parallel zur Längsachse 30 des Lötwerkzeugs 10 verläuft.

An ihrem hinteren, dem Handhabungsbereich 4 zugewandten Endbereich 32 ist ein in Richtung auf den Handhabungsbereich 4 vorspringender mit einer Rändelung 34 versehener Stift 36 in eine entsprechende Öffnung eingesetzt. Die Montage der Abdeckhaube 8 am Brenner 6 erfolgt in der Weise, dass der Stift 36 in einer aus der Figur 1 ersichtlichen Klemmvorrichtung 38 den Brenner 6 sowie den Flammenraum 12 überfangend befestigt wird.

Zwischen der Öffnung 20 und dem Endbereich 32 ist in dem schräg nach unten verlaufenden Wandbereich 18 eine Lüftungsöffnung 40 ausgebildet, durch welche die Verbrennungsgase entweichen können.

In der Figur 6 sind in Seitenwänden 42, 44, welche den Flammenraum 12 nach den Seiten hin abschließen, Öffnungen 46, 48 ausgebildet, in welchen ein Abstellbügel 50 mit seinen um 90° abgebogenen freien Enden schwenkbar angelenkt ist. Am unteren Ende der Seitenwände 42, 44 sind nach außen vorstehende Noppen 52, 54 vorgesehen, über welche der Abstellbügel 50 beim Einklappen und Ausklappen hinweggeführt werden muß und die den Bügel in seiner eingeklappten Position halten, wenn dies erwünscht ist. Mit den Bezugszeichen 56, 58 sind Anlagestege für den ausgeklappten Abstellbügel 50 angedeutet.

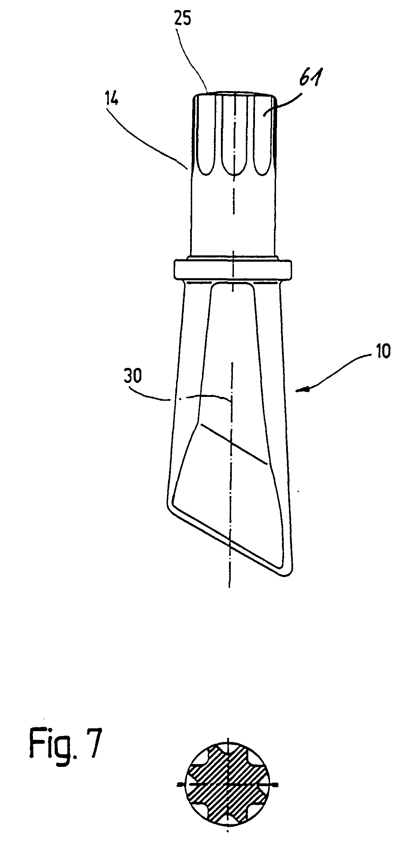

Schließlich ist aus den Figuren 4 und 5 eine besonders vorteilhafte Gestaltung der Werkzeugaufnahme 26 ersichtlich. Der rohrförmige Wandbereich 28 weist an seiner Innenseite zwei in Längsrichtung des einzusetzenden Werkzeugs 10 verlaufende Stege 60 auf. Das im einzelnen in der Figur 7 dargestellte Lötwerkzeug 10 weist an der Mantelfläche seines oberen Schaftabschnitts 14 in Längsrichtung 30 des Lötwerkzeugs 10 verlaufende Nuten 61 auf, die zur Stirnseite 25 hin offen sind und mit den Stegen 60 nut- und federartig zusammenwirken, so dass das Werkzeug 10 in der Aufnahme 26 der Abdeckhaube 8 verdrehsicher gehalten ist. Wie aus der Figur 7 ferner ersichtlich ist, ist das Lötwerkzeug am freien Ende seines oberen Werkzeugschaftabschnitts 14 über seinen vollen Umfang profiliert, so dass das Lötwerkzeug 10 in insgesamt acht verschiedenen Relativpositionen zu dem Lötkolben 2 montierbar ist, was sich für den Einsatz unter räumlich beengten Verhältnissen als besonders wertvoll erweisen kann.

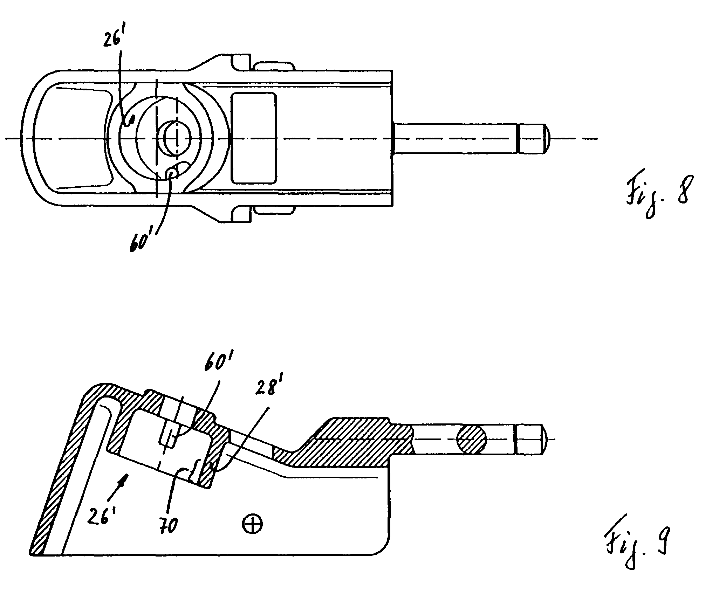

Aus den Figuren 8 und 9 ist eine weitere besonders vorteilhafte Gestaltung der Werkzeugaufnahme 26' ersichtlich. Ein von dem rohrförmigen Wandbereich 28' in radialer Richtung nach innen vorspringender Steg 60' erstreckt sich vom Boden der Werkzeugaufnahme 26' in axialer Richtung und endet in einem Abstand zu der Öffnung des rohrförmigen Wandbereichs 28'. Wird ein Lötwerkzeug in die Werkzeugaufnahme 26' eingeführt, so läßt es sich innerhalb des ersten axialen Abschnitts 70 der Werkzeugaufnahme 26' um seine Längsachse verdrehen und in eine erwünschte Montageposition bringen. In dieser Montageposition wird das Lötwerkzeug dann weiter in Richtung auf den Boden der Aufnahme 26' geschoben, so dass der Steg 60' in eine Nut 61 des Werkzeugschafts eingreifen und eine Verdrehsicherung ausbilden kann.

Wenn die Ausrichtung des Lötwerkzeugs zum Lötkolben verändert werden soll, so braucht eine in der Zeichnung nicht dargestellte Schraube, welche in die Stirnseite des Werkzeugschafts eingeschraubt ist, um das Lötwerkzeug in der Aufnahme 26' zu halten, nur soweit gelöst zu werden, dass das Lötwerkzeug aus der Verdrehsicherung freikommt und innerhalb des ersten axialen Abschnitts 70 der Werkzeugaufnahme 26' verdreht werden kann.

## Patentansprüche

1. Lötkolben (2) mit einem Brenner (6) zum Erhitzen eines Lötwerkzeugs (10) und einer in Richtung des Lötwerkzeugs (10) und einer Bearbeitungsposition offenen Abdeckhaube (8), in welche das Lötwerkzeug (10) einsetzbar und an welcher das Lötwerkzeug (10) befestigbar ist, wobei die Abdeckhaube die auf das Lötwerkzeug einwirkende Brennerflamme abdeckt, **dadurch gekennzeichnet**, dass die Abdeckhaube (8) auf der vom Brenner (6) abgewandten Seite nach vornehin durch einen Wandbereich (16) geschlossen ist.

2. Lötkolben nach Anspruch 1, dadurch gekennzeichnet, dass der vordere Wandbereich (16) der Abdeckhaube (8) zur Längsachse des Lötkolbens geneigt und zur Längsachse (30) des Lötwerkzeugs (10) parallel verläuft.

3. Lötkolben nach Anspruch 1 oder 2, dadurch gekennzeichnet, dass die Abdeckhaube (8) an ihrem hinteren, dem Handhabungsbereich (4) des Lötkolbens (2) zugewandten Ende einen nach hinten vorspringenden Stift (36) zum Montieren der Abdeckhaube (8) aufweist.

4. Lötkolben nach einem der vorstehenden Ansprüche, dadurch gekennzeichnet, dass der bei horizontaler Handhabung des Lötkolbens (2) schräg nach oben verlaufende vordere Wandbereich (16) der Abdeckhaube (8) in einen etwa rechtwinklig hierzu angeordneten, schräg nach unten verlaufenden Randbereich (18) übergeht, in dem eine Öffnung (20) zum Montieren des Lötwerkzeugs vorgesehen ist.

5. Lötkolben nach einem der vorhergehenden Ansprüche, dadurch gekennzeichnet, dass im Inneren der Abdeckhaube eine Aufnahme (26) für das Lötwerkzeug (10) vorgesehen ist, in welche das Lötwerkzeug (10) eingeschoben und dabei bestimmungsgemäß positioniert werden kann.

6. Lötkolben nach Anspruch 5, dadurch gekennzeichnet, dass die Aufnahme (26) von einem rohrförmigen Wandabschnitt (28) gebildet ist und das Lötwerkzeug (10) auf der inneren Seite des die Öffnung umgebenden Wandbereichs (18) der Abdeckhaube (16) abstützbar ist.

7. Lötkolben nach Anspruch 5 oder 6, dadurch gekennzeichnet, dass die Aufnahme (26) eine Verdrehsicherung für das Lötwerkzeug aufweist.

8. Lötkolben nach Anspruch 7, dadurch gekennzeichnet, dass die Verdrehsicherung von einer in Längsrichtung (30) des einzusetzenden Lötwerkzeugs (10) verlaufenden nut- und federartigen Ausbildung von Aufnahme (26) und Werkzeugschaft (14) gebildet ist.

9. Lötkolben nach Anspruch 8, dadurch gekennzeichnet, dass die Aufnahme (26) einen in Längsrichtung (30) des Lötwerkzeugs (10) verlaufenden und nach innen vorspringenden Steg (60) aufweist, der mit einer von mehreren Längsnuten (61) am Werkzeugschaft (14) des Lötwerkzeugs (10) zusammenwirkt.

10. Lötkolben nach Anspruch 8 oder 9, dadurch gekennzeichnet, dass die Verdrehsicherung eine geringere axiale Erstreckung aufweist als die Aufnahme (26'), so dass das Lötwerkzeug (10) innerhalb eines ersten axialen Abschnitts der Aufnahme (26') bezüglich dieser um seine Längsachse umdrehbar ist.

11. Lötkolben nach einem oder mehreren der vorstehenden Ansprüche, dadurch gekennzeichnet, dass zwischen der Montageöffnung (20) und dem hinteren, dem Handhabungsbereich (4) des Lötkolbens (2) zugewandten Ende der Abdeckhaube (8) ein bei horizontaler Handhabung nach oben offener Lüftungsschlitz (40) für die Abgasabführung vorgesehen ist.

12. Lötwerkzeug, insbesondere Lötfinne, für einen einen Brenner aufweisenden Lötkolben (2), insbesondere nach einem der vorstehenden Ansprüche, mit einem Werkzeugschaft (14), der einen axialen Montageabschnitt mit einer in Längsrichtung verlaufende Nuten (61) aufweisenden Profilierung zur Ausbildung einer Verdrehsicherung mit einer Aufnahme (26) des Lötkolbens (2) aufweist.
